# EUROPEAN PATENT SPECIFICATION

(11) **EP 3 310 184 B1**
(45) Date of publication and mention of the grant of the patent: **20.01.2021**
(21) Application number: 15895271.3
(22) Date of filing: 19.06.2015
(51) Int. Cl.: A23G 9/32, A23G 9/00, A23G 1/30, A23G 3/34, A23P 20/10, A23D 9/007, A23G 9/40, A23C 9/13

(54) **YOGURT-BASED COATING FOR FROZEN FOOD PRODUCTS**
BESCHICHTUNG AUF JOGHURTBASIS FÜR GEFRORENE LEBENSMITTELPRODUKTE
ENROBAGE À BASE DE YAOURT POUR PRODUITS ALIMENTAIRES CONGELÉS

(43) Date of publication of application: 25.04.2018
(73) Proprietor: General Mills, Inc., Minneapolis, MN 55426 (US)
(72) Inventor: LI, Yihui, Shanghai (CN); LI, Jiazhuang, Hefei City Anhui (CN); HUANG, Hsin-Chi, Fayetteville, Arkansas 72703 (US)
(74) Representative: Vossius & Partner Patentanwälte Rechtsanwälte mbB
(86) International application number: PCT/CN2015/081947
(87) International publication number: WO 2016/201698

(56) References cited:
- CN-A- 102 138 614
- CN-C- 100 346 707
- RU-C1- 2 294 109
- US-A- 4 150 163
- US-A- 4 568 557
- US-A1- 2006 263 496
- US-A1- 2007 160 589
- Anonymous: "Fat and Oil Melt Point Temperatures - Monounsaturated, Polyunsaturated and Saturated Fat Contents - Veganbaking.net - Recipes, desserts and tips", , 1 January 2018 (2018-01-01), pages 1-4, XP055521155, Retrieved from the Internet: URL:http://www.veganbaking.net/articles/to ols/fat-and-oil-melt-point-temperatures [retrieved on 2018-11-05]

## Description

### Background

Ice cream and other frozen foods are a treat enjoyed in many places around the world. Consumers often view such frozen foods as an indulgence, and so often look for a unique or particularly enjoyable eating experience from ice cream and other similar frozen treats in order to make the eating experience memorable. There is a need, then, to provide new frozen foods that satisfy customer demand for unique and enjoyable eating experiences.

### Field

The present disclosure relates to compound coating technology and more particularly, to a yogurt-based coating composition suitable for coating frozen foods with a yogurt-based coating.

### Summary

Provided herein is a method of making a yogurt-based coating composition. The method includes combining an oil and lecithin solution with yogurt and a sugar solution to produce a sweetened yogurt mixture at a temperature of from about 40° C to about 45° C; and emulsifying the sweetened yogurt mixture to produce the yogurt-based coating composition comprising an emulsion that is stable for at least 30 minutes at 25° C and contains from about 45% to about 54% by weight of an oil having a melting point of from about 25° C to about 35° C, about 29% to about 38% by weight yogurt, about 8% to about 12% by weight sugar, about 0.5% to about 1% by weight lecithin, and containing at least 103 colony forming units (CFU) lactic acid bacteria per gram of the yogurt-based coating composition. In some embodiments, the sweetened yogurt mixture is emulsified in a shear emulsifier at about 8,000 rpm to about 10,000 rpm for 90 seconds to 150 seconds. In some embodiments, the sweetened mixture is emulsified in a high pressure emulsifier at about 500 bar to about 800 bar pressure for 90 seconds to 150 seconds.

In some embodiments, the yogurt-based coating composition comprises 53% to 54% coconut oil, 29% to 30% yogurt, 9% to 11% sugar, and 0.75% to 0.9% lecithin.

In some embodiments, the yogurt has a protein content of from about 3% to about 5% and a fat content of from about 6% to about 9%.

In some embodiments, the yogurt has a viscosity of about: 20,0 Pa.s (20,000cp) to about 21,5 Pa.s (21,500cp) prior to combining with the oil and lecithin mixture.

In some embodiments, the lecithin is dissolved in the oil at a temperature of about 68° C to about 75° C.

Provided herein is also a method of making a yogurt-based coating composition includes combining an oil and lecithin solution with yogurt to produce a yogurt and oil mixture at a temperature of from about 40° C to about 45° C; emulsifying the yogurt and oil mixture to produce a first emulsion; combining the first emulsion with a sugar solution to produce a sweetened yogurt mixture; and emulsifying the sweetened yogurt mixture to produce the yogurt-based coating composition comprising a second emulsion that is stable for at least 30 minutes at 25° C and contains from about 45% to about 54% by weight of an oil having a melting point of from about 25° C to about 35° C, about 29% to about 38% by weight yogurt, about 8% to about 12% by weight sugar, about 0.5% to about 1% by weight lecithin, and containing at least 103 CFU lactic acid bacteria per gram of the yogurt-based coating composition. In some embodiments, each of the first and the second emulsion is produced in a shear emulsifier at about 8,000 rpm to about 10,000 rpm for a total of 90 seconds to 150 seconds. In some embodiments, each of the first and the second emulsion is produced in a high pressure emulsifier at about 500 bar to about 800 bar pressure for a total of 90 seconds to 150 seconds.

In some embodiments, the yogurt-based coating composition comprises 53% to 54% coconut oil, 29% to 30% yogurt, 9% to 11% sugar, and 0.75% to 0.9% lecithin.

In some embodiments, the yogurt has a protein content of from about 3% to about 5% and a fat content of from about 6% to about 9%.

In some embodiments, the yogurt has a viscosity of about: 20,0 Pa.s (20,000cp) to about 21,5 Pa.s (21,500cp) prior to combining with the oil and lecithin mixture.

In some embodiments, the lecithin is dissolved in the oil at a temperature of about 68° C to about 75° C.

A method of making a coated frozen food is also provided as defined in the appended claims. The method includes applying a yogurt-based coating composition comprising an emulsion that is stable for at least 30 minutes at 25° C and contains from about 45% to about 54% by weight of an oil having a melting point of from about 25° C to about 35° C, about 29% to about 38% by weight yogurt, about 8% to about 12% by weight sugar, about 0.5% to about 1% by weight lecithin, and containing at least 103 colony forming units (CFU) lactic acid bacteria per gram of the yogurt-based coating composition. In some embodiments, the sweetened yogurt mixture is emulsified in a shear emulsifier at about 8,000 rpm to about 10,000 rpm for 90 seconds to 150 seconds. In some embodiments, the sweetened mixture is emulsified in a high pressure emulsifier at about 500 bar to about 800 bar pressure for 90 seconds to 150 seconds at a temperature of from about 28° C to about 30° C to a surface of a frozen food to coat the surface of the frozen food with a yogurt-based coating having a thickness of from about 2 mm to about 3 mm; and chilling the coated frozen food at a temperature of from about 0° C to about 4° C, wherein the coating on the coated frozen food contains at least 103 CFU lactic acid bacteria per gram coating.

Provided herein is a yogurt-based coating composition including about 29% to about 38% yogurt, about 45% to about 54% coconut oil, about 8% to about 12% sugar, about 0.5% to about 1% lecithin, and at least 103 CFU lactic acid bacteria. In some embodiments, the yogurt-based coating composition comprises an emulsion that is stable at 25° C for at least 30 minutes.

Provided herein is a frozen food including ice cream having a surface coated with about 2 mm to about 3 mm of the yogurt-based coating composition having about 29% to about 38% yogurt, about 45% to about 54% coconut oil, about 8% to about 12% sugar, about 0.5% to about 1% lecithin, wherein the coating on the frozen food contains at least 103 CFU lactic acid bacteria per gram coating.

### Detailed Description

As consumers demand more unique eating experiences, especially from foods that are frequently considered indulgences, there is a challenge to produce foods that satisfy customer tastes and trends. It is particularly challenging to produce frozen foods, such as ice cream, that can provide an enjoyable eating experience for the entirety of the frozen shelf life of the product. In addition, new foods should consider both standard ingredients, as well as formulations with mostly-natural, all-natural, or non-GMO ingredients in order to provide consumers with choices that fit their ingredient expectations while still providing a delightful eating experience. Described herein is a yogurt-based coating composition that is suitable for coating frozen foods with a yogurt-based coating and can be formulated as all-natural and/or non-GMO while providing a delightful eating experience throughout a frozen shelf life of at least 1 month (e.g., at least 4 months).

A yogurt-based coating provided herein includes yogurt, oil, an emulsifier, and sugar. A yogurt-based coating described herein provides several handling and storage benefits while still maintaining a desirable texture and flavor. For example, a yogurt-based coating described herein is surprisingly stable over a frozen shelf life of at least 1 month (e.g., at least 4 months), and can be stored without separation of oil, protein, or water from the coating. In addition, a yogurt-based described herein resists cracking during manufacture, handling, and storage, while still providing a first-bite crispness to a frozen food, producing an audible snap when bitten. In addition, a yogurt-based coating can provide a smooth mouthfeel resulting from rapid melting in the mouth following a first-bite crispness.

A yogurt-based coating described herein can include a surprisingly high amount of yogurt while retaining stability and texture over the frozen shelf life of a coated frozen food. The relatively high amount of yogurt can provide a distinct yogurt flavor that can be increased with increasing amounts of yogurt or modified with the addition of flavoring agents, such as fruit juices or flavors.

A yogurt-based coating provided herein can also have an added benefit of containing live and active lactic acid bacteria. The yogurt-based coating of the present invention contains at least about 10³ colony forming units (CFU), or at least 10⁴ CFU of lactic acid bacteria (e.g., *Lactobacillus delbrueckii* subsp. *bulgaricus, Streptococcus thermophilus,* and the like, or a combination thereof) per gram coating. Live and active lactic acid bacteria cultures are believed to contribute to health benefits associated with yogurt.

### Yogurt

Yogurt is included in a yogurt-based coating in an amount of between about 29% to about 38% by weight of the yogurt-based coating. An amount below 29% can reduce the yogurt flavor of the yogurt-based coating too much, while an amount greater than 38% can result in instability of the coating due to an increased water content of the coating. In some embodiments, the amount of yogurt included in a yogurt-based coating can be adjusted to arrive at a desired amount of live and active lactic acid bacteria in the yogurt-based coating.

A yogurt suitable for use in a yogurt-based coating provided herein has a protein content of about 3% to about 5% (e.g., from about 3.5% to about 3.7%), a fat content of about 6% to about 9% (e.g., about 8%), and a pH of about 3.5 to about 4 (e.g., from about 3.6 to about 3.8). A suitable yogurt can have a viscosity of about 20,0 - 21,5 Pa.s (20,000 - 21,500 cp).

In some embodiments, a yogurt is formulated and fermented for a strong yogurt flavor. Generally, a relatively long fermentation time and a culture specifically selected for long fermentation can produce a strong yogurt flavor as well as the desired viscosity, pH, and nutritional profile.

In some embodiments, the ingredients used for fermentation can be adjusted to result in a desired nutritional profile, pH, or viscosity. For example, suitable ingredients, such as whole milk, skim milk, and cream can be combined and fermented to produce a yogurt having an appropriate fat and protein content. In addition, the amount of fat and protein can be adjusted to adjust the viscosity of a yogurt suitable for use in a yogurt-based coating described herein.

Generally, a yogurt suitable for use in a yogurt-based coating is stored at 0° C to 4° C prior to use in a yogurt-based coating.

### Oil

Oil is included in a yogurt-based coating in an amount of between about 45% to 54% by weight of the yogurt-based coating. An amount of oil greater than 54% can result in a coating that results in an oily or waxy mouthfeel or form white spots on the surface during storage due to oil migration. An amount of oil less than 45% can result in a coating that does not provide a desired crispness upon biting.

Suitable oils include one or a combination of oils or oil fractions that are solid at room temperature and have a melting point of from about 25° C to about 35° C. An oil or combination of oils having a melting point of about 25° C to about 35° C provide an appropriate level of first-bite crispness to a frozen food coated with a yogurt-based coating, as well as a melting profile that prevents waxiness when in the mouth. Melting points below 25° C exhibit decreasing hardness when used in a yogurt-based coating and increase cracking risk of the coating in subsequent steps, such as decoration or storage. Melting points above 35° C exhibit increasing waxiness in the mouth. In addition, a suitable oil is liquid at a temperature low enough (e.g., about 68° C to about 75° C) to reduce the risk of damaging any added emulsifier and remain liquid at a temperature low enough (e.g., about 40° C to about 45° C) to prevent denaturation of yogurt proteins. In some embodiments, a suitable oil is liquid at a temperature (e.g., about 40° C to about 45° C) that reduces the risk of damaging live and active lactic acid bacteria. A particularly suitable oil is coconut oil.

### Sugar

Sugar is included in a yogurt-based coating in an amount of between about 8% to about 12% (e.g., from about 9% to about 11%, or about 10%) by weight of the yogurt-based coating. Generally, sucrose is the preferred sugar for use in a yogurt-based coating, though other sugars, such as fructose and maltose can also be used alone or in combination. The amount of sugar can be adjusted to provide a desired sweetness and appearance of a frozen food product coated with a yogurt-based coating.

### Emulsifier

An emulsifier is included in a yogurt-based coating in an amount of from about 0.5% to about 1% (e.g., from about 0.75% to about 0.9%, or about 0.85%) by weight of the yogurt-based coating.

Emulsifiers suitable for use in a yogurt-based coating include lecithin (e.g., soy lecithin) and sodium/calcium stearoyl lactylate (SSL/CSL). Lecithin is the emulsifier for use in an all-natural or mostly-natural yogurt-based coatings of the present invention. Other natural emulsifiers, such as egg yolk, may have reduced emulsifying ability if heated to temperatures suitable for a method of making a yogurt-based coating provided herein.

### Other Ingredients

Other ingredients can be included in a yogurt-based coating provided herein. For example, natural or artificial colors or flavors can be added to provide a variety of flavor and appearance options.

### Method

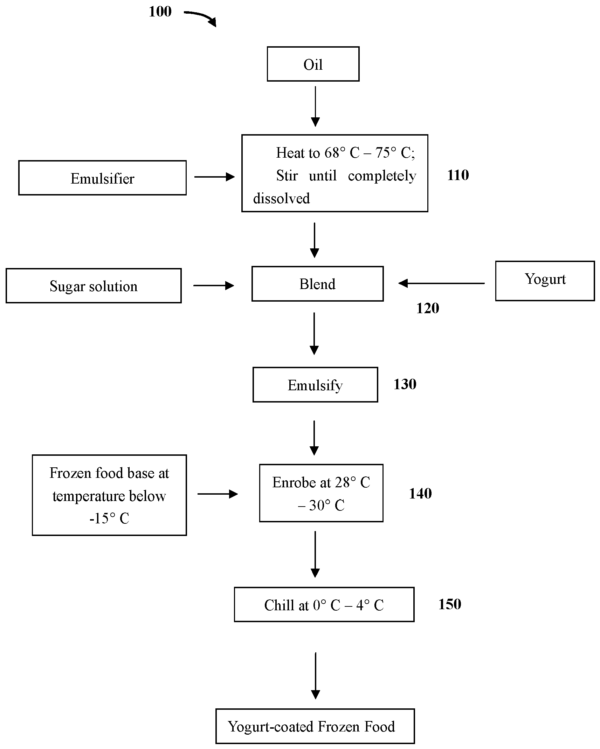

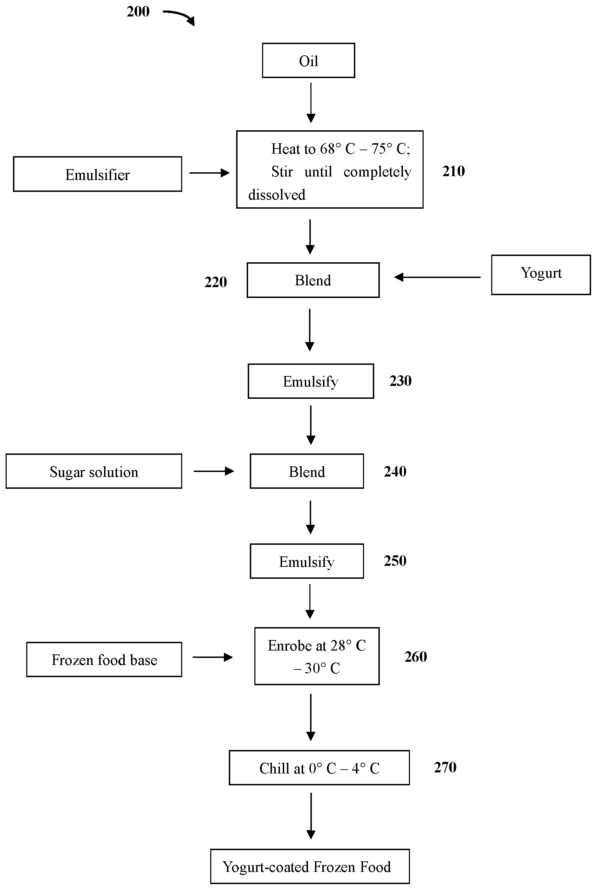

A method for making a yogurt-based coating provided herein is shown in Figures 1 and 2. Generally, a method for making a yogurt-based coating composition 100, 200 includes dissolving an emulsifier in a heated oil 110, 210 to produce an oil and emulsifier solution, blending a yogurt and a sugar solution with the heated oil mixture to produce a sweetened yogurt mixture 120, and emulsifying the sweetened yogurt mixture 130, 250 to produce a yogurt-based coating composition. The yogurt-based coating composition can then be applied to a frozen food 140, 260, such as ice cream and chilled 150, 270 to form a yogurt-based coating.

To make an oil and emulsifier solution, oil is heated to a temperature range of 68° C to 75° C and emulsifier is added and stirred until completely dissolved. This temperature range maintains the oil in a liquid state and facilitates emulsifier dissolution. A temperature higher than 75° C can result in reduced emulsifier activity. In addition, a temperature higher than 75° C can result in off-flavors from degraded emulsifier and yogurt proteins and reduce the viability of the lactic acid bacteria culture in subsequent steps. A temperature lower than 68° C can reduce the ability of an emulsifier to dissolve in the oil.

In some embodiments, a yogurt-based coating composition can be made by blending an oil and emulsifier solution with a yogurt and a sugar solution in a continuous emulsion process 100.

In other embodiments, a yogurt-based coating composition can be made by blending an oil and emulsifier solution with a yogurt to make a yogurt and oil mixture 220 and emulsifying the yogurt and oil mixture to make a first emulsion 230, then adding a sugar solution to the first emulsion to make a sweetened yogurt mixture 240 and emulsifying the sweetened yogurt mixture to make a second emulsion 250, in a two-step emulsion process 200, as shown in Figure 2.

Yogurt is added to the oil and emulsifier solution to form a yogurt and oil mixture (in a two-step emulsion process) or sweetened yogurt mixture (in a continuous emulsion process) at a temperature of from about 40° C to about 45° C. A temperature outside the range of from about 40° C to about 45° C may not efficiently form an emulsion. A temperature higher than 45° C can result in a reduction of the viability of the lactic acid bacteria culture or denaturation of yogurt proteins.

In some embodiments, the temperature of the yogurt is from about 0° C to about 4° C prior to combining with the oil and emulsifier solution, which when combined with the oil and emulsifier solution, results in the desired temperature of from about 40° C to about 45° C. In some embodiments, the oil and emulsifier solution can be cooled and/or the yogurt warmed so that the yogurt and oil mixture is at a temperature of from about 40° C to about 45° C. In addition, the temperature of a sugar solution added in a continuous emulsion process can be adjusted as desired to result in a sweetened yogurt mixture at a temperature of from about 40° C to about 45° C.

The concentration and amount of sugar solution added can be adjusted to result in a sugar content of from about 8% to about 12% of the sweetened yogurt mixture.

Emulsion can be performed using a shear emulsifier at 8,000 rpm to 10,000 rpm or a high pressure emulsifier at about 500 bar to about 800 bar. Emulsification is performed for a time sufficient to form a yogurt-based coating composition comprising an emulsion that is stable for at least 30 minutes at 25° C. An emulsion is considered stable if the appearance remains homogeneous after 30 minutes at 25° C.

In a continuous emulsion process, emulsion of a sweetened yogurt mixture is done for 90 seconds to 150 seconds (e.g., about 100 seconds to about 140 seconds, or about 120 seconds).

The combined emulsification time in a two-step emulsification process is sufficient to produce a second emulsion that is homogeneous in appearance and stable for at least 30 minutes at 25° C. In a two-step emulsion process the combined emulsification time for producing the first emulsion and second emulsion is from about 90 seconds to about 150 seconds (e.g., about 100 seconds to about 140 seconds, or about 120 seconds). For example, in a two-step emulsion process, each of the yogurt and oil mixture and the sweetened yogurt mixture can be emulsified for 45 seconds to 75 seconds (e.g., 50 seconds to 70 seconds, or 60 seconds).

If emulsification is done in a shear emulsifier at a speed outside of 8,000 rpm to 10,000 rpm or a time outside of 90 seconds to 150 seconds, the emulsion may not form for a yogurt-based coating composition or the emulsion may not remain stable for at least 30 minutes at 25° C. Similarly, if emulsification is done using a high pressure emulsifier at a pressure outside of 500 bar to 800 bar or a time outside of 90 seconds to 150 seconds, the emulsion may not form for a yogurt-based coating composition or the emulsion may not remain stable for at least 30 minutes at 25° C.

A yogurt-based coating composition can have a viscosity of about 0,5Pa.s (500cp) to 0,8 Pa.s (800cp) (e.g. from about 0,6Pa.s (600cp) to about 0,7 Pa.s (700cp)). A viscosity less than 0,5 Pa.s (500 cp) may not produce a sufficiently thick coating on a frozen food base during enrobing, while a viscosity greater than 0,8 Pa.s (800cp) may produce a coating that is too thick.

A yogurt-based coating composition provided herein includes at least 10³, or at least 10⁴ CFU of lactic acid bacteria per gram of yogurt ased coating composition.

In some embodiments, an oil and emulsifier solution, yogurt, and sugar solution can be combined and stored or combined and shipped prior to emulsification in order to form a yogurt-based coating composition.

A yogurt-based coating composition can be applied at a temperature of from about 28° C to about 30° C to a frozen food base (e.g., ice cream) that is at a temperature of less than -15° C (e.g., from about -20° C to about -40° C, or about -25° C) to produce a frozen food product coated with a yogurt-based coating. At these temperatures, the yogurt-based coating can coat the frozen food base at a thickness of 2-3 mm. At a yogurt-based coating temperature below 28° C, the yogurt-based coating may be too viscous for sufficient flowability and result in a too thick of a coating or may not successfully coat the food base at all. A coating that is thicker than 3 mm on a frozen food can result in a texture that is too hard to provide an enjoyable eating experience and can contribute to a higher cracking risk during storage or transportation. At a yogurt-based coating composition temperature above 30° C, the yogurt-based coating composition may be too runny and form a too thin of a coating. A coating that is thinner than 2 mm on a frozen food can also result in a higher cracking risk, as well as result in the frozen food base being at risk of melting and losing its shape. A thickness of 2-3mm provides the coating with a good balance of strength and flexibility, not too fragile or too rigid to prevent cracking.

Once a frozen food base is coated with a yogurt-based coating composition, the coated food can be chilled at a temperature of less than 4° C (e.g., 0° C to 4°C). Chilling the coated food can further solidify the coating and facilitate packaging and any decoration steps. A frozen food that has a yogurt-based coating provided herein includes at least 10³ (e.g., at least 10⁴) CFU lactic acid bacteria per gram of the coating.

The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

1. A method of making a yogurt-based coating composition, comprising:
a. combining an oil and lecithin solution with yogurt and a sugar solution to produce a sweetened yogurt mixture at a temperature of from about 40° C to about 45° C; and
b. emulsifying the sweetened yogurt mixture to produce the yogurt-based coating composition which is an emulsion that is stable for at least 30 minutes at 25° C and contains from about 45% to about 54% by weight of an oil having a melting point of from about 25° C to about 35° C, about 29% to about 38% by weight yogurt, about 8% to about 12% by weight sugar, about 0.5% to about 1% by weight lecithin, and containing at least 10³ colony forming units (CFU) lactic acid bacteria per gram of the yogurt-based coating composition.

2. The method of claim 1, wherein the sweetened yogurt mixture is emulsified in a shear emulsifier at about 8,000 rpm to about 10,000 rpm for 90 seconds to 150 seconds.

3. The method of claim 1, wherein the sweetened mixture is emulsified in a high pressure emulsifier at about 500 bar to about 800 bar pressure for 90 seconds to 150 seconds.

4. A method of making a yogurt-based coating composition, comprising:
a. combining an oil and lecithin solution with yogurt to produce a yogurt and oil mixture at a temperature of from about 40° C to about 45° C;
b. emulsifying the yogurt and oil mixture to produce a first emulsion;
c. combining the first emulsion with a sugar solution to produce a sweetened yogurt mixture;
d. emulsifying the sweetened yogurt mixture to produce the yogurt-based coating composition which is a second emulsion that is stable for at least 30 minutes at 25° C and contains from about 45% to about 54% by weight of an oil having a melting point of from about 25° C to about 35° C, about 29% to about 38% by weight yogurt, about 8% to about 12% by weight sugar, about 0.5% to about 1% by weight lecithin, and containing at least 10³ CFU lactic acid bacteria per gram of the yogurt-based coating composition.

5. The method of claim 4, wherein each of the first and the second emulsion is produced in a shear emulsifier at about 8,000 rpm to about 10,000 rpm for a total of 90 seconds to 150 seconds.

6. The method of claim 4, wherein each of the first and the second emulsion is produced in a high pressure emulsifier at about 500 bar to about 800 bar pressure for a total of 90 seconds to 150 seconds.

7. The method of claim 1 or 4, wherein the yogurt-based coating composition comprises 53% to 54% coconut oil, 29% to 30% yogurt, 9% to 11% sugar, and 0.75% to 0.9% lecithin.

8. The method of claim 1 or 4, wherein the yogurt has a protein content of from about 3% to about 5% and a fat content of from about 6% to about 9%.

9. The method of claim 1 or 4, wherein the lecithin is dissolved in the oil at a temperature of about 68° C to about 75° C.

10. A method of making a coated frozen food, comprising:
a. applying the yogurt-based coating composition of claim 1 or claim 4 at a temperature of from about 28° C to about 30° C to a surface of a frozen food to coat the surface of the frozen food with a yogurt-based coating having a thickness of from about 2 mm to about 3 mm; and
b. chilling the coated frozen food at a temperature of from about 0° C to about 4° C, wherein the coating on the coated frozen food contains at least 10³ CFU lactic acid bacteria per gram coating.

11. A yogurt-based coating composition, comprising:
a. about 29% to about 38% yogurt;
b. about 45% to about 54% coconut oil;
c. about 8% to about 12% sugar;
d. about 0.5% to about 1% lecithin; and
e. at least 10³ CFU lactic acid bacteria per gram coating.

12. The yogurt-based coating composition of claim 11, wherein the yogurt-based coating composition is an emulsion that is stable at 25° C for at least 30 minutes.

13. A frozen food, comprising ice cream having a surface coated with about 2 mm to about 3 mm of the yogurt-based coating composition of claim 12, wherein the coating on the frozen food contains at least 10³ CFU lactic acid bacteria per gram coating.

## Patentansprüche

1. Ein Verfahren zum Herstellen einer Beschichtungszusammensetzung auf Joghurtbasis, umfassend:
a. Zusammenführen einer Öl-und-Lecithin-Lösung mit Joghurt und einer Zuckerlösung, um ein gesüßtes Joghurtgemisch mit einer Temperatur von etwa 40 °C bis etwa 45 °C herzustellen; und
b. Emulgieren des gesüßten Joghurtgemischs, um die Beschichtungszusammensetzung auf Joghurtbasis herzustellen, bei der es sich um eine Emulsion handelt, die bei 25 °C mindestens 30 Minuten stabil ist und die zu etwa 45 Gew.-% bis etwa 54 Gew.-% ein Öl mit einem Schmelzpunkt von etwa 25 °C bis etwa 35 °C, zu etwa 29 Gew.-% bis etwa 38 Gew.-% Joghurt, zu etwa 8 Gew.-% bis etwa 12 Gew.-% Zucker, zu etwa 0,5 Gew.-% bis etwa 1 Gew.-% Lecithin enthält und die mindestens 10³ koloniebildende Einheiten (KBE) Milchsäurebakterien pro Gramm Beschichtungszusammensetzung auf Joghurtbasis enthält.

2. Das Verfahren nach Anspruch 1, wobei das gesüßte Joghurtgemisch in einem Scheremulgator bei etwa 8.000 Upm bis etwa 10.000 Upm 90 Sekunden bis 150 Sekunden lang emulgiert wird.

3. Das Verfahren nach Anspruch 1, wobei das gesüßte Gemisch in einem Hochdruckemulgator bei etwa 500 bar bis etwa 800 bar Druck 90 Sekunden bis 150 Sekunden lang emulgiert wird.

4. Ein Verfahren zum Herstellen einer Beschichtungszusammensetzung auf Joghurtbasis, umfassend:
a. Zusammenführen einer Öl-und-Lecithin-Lösung mit Joghurt, um ein Joghurt-und-Öl-Gemisch mit einer Temperatur von etwa 40 °C bis etwa 45 °C herzustellen;
b. Emulgieren des Joghurt-und-Öl-Gemisches, um eine erste Emulsion herzustellen;
c. Zusammenführen der ersten Emulsion mit einer Zuckerlösung, um ein gesüßtes Joghurtgemisch herzustellen;
d. Emulgieren des gesüßten Joghurtgemischs, um die Beschichtungszusammensetzung auf Joghurtbasis herzustellen, bei der es sich um eine zweite Emulsion handelt, die bei 25 °C mindestens 30 Minuten stabil ist und die zu etwa 45 Gew.-% bis etwa 54 Gew.-% ein Öl mit einem Schmelzpunkt von etwa 25 °C bis etwa 35 °C, zu etwa 29 Gew.-% bis etwa 38 Gew.-% Joghurt, zu etwa 8 Gew.-% bis etwa 12 Gew.-% Zucker, zu etwa 0,5 Gew.-% bis etwa 1 Gew.-% Lecithin enthält und die mindestens 10³ KBE Milchsäurebakterien pro Gramm Beschichtungszusammensetzung auf Joghurtbasis enthält.

5. Das Verfahren nach Anspruch 4, wobei die erste und die zweite Emulsion jeweils in einem Scheremulgator bei etwa 8.000 Upm bis etwa 10.000 Upm insgesamt 90 Sekunden bis 150 Sekunden lang emulgiert werden.

6. Das Verfahren nach Anspruch 4, wobei die erste und die zweite Emulsion jeweils in einem Hochdruckemulgator bei etwa 500 bar bis etwa 800 bar Druck insgesamt 90 Sekunden bis 150 Sekunden lang emulgiert werden.

7. Das Verfahren nach Anspruch 1 oder 4, wobei die Beschichtungszusammensetzung auf Joghurtbasis zu 53 % bis 54 % Kokosöl, zu 29 % bis 30 % Joghurt, zu 9 % bis 11 % Zucker und zu 0,75 % bis 0,9 % Lecithin enthält.

8. Das Verfahren nach Anspruch 1 oder 4, wobei der Joghurt einen Proteingehalt von etwa 3 % bis etwa 5 % und einen Fettgehalt von etwa 6 % bis etwa 9 % aufweist.

9. Das Verfahren nach Anspruch 1 oder 4, wobei das Lecithin in dem Öl bei einer Temperatur von etwa 68 °C bis etwa 75 °C aufgelöst wird.

10. Ein Verfahren zum Herstellen eines beschichteten gefrorenen Lebensmittels, umfassend:
a. Aufbringen der Beschichtungszusammensetzung auf Joghurtbasis nach Anspruch 1 oder Anspruch 4 bei einer Temperatur von etwa 28 °C bis etwa 30 °C auf eine Oberfläche eines gefrorenen Lebensmittels, um die Oberfläche des gefrorenen Lebensmittels mit einer Beschichtung auf Joghurtbasis mit einer Dicke von etwa 2 mm bis etwa 3 mm zu beschichten; und
b. Kühlen des beschichteten gefrorenen Lebensmittels bei einer Temperatur von etwa 0 °C bis etwa 4 °C, wobei die Beschichtung auf dem beschichteten gefrorenen Lebensmittel mindestens 10³ KBE Milchsäurebakterien pro Gramm Beschichtung enthält.

11. Eine Beschichtungszusammensetzung auf Joghurtbasis, umfassend:
a. zu etwa 29 % bis etwa 38 % Joghurt;
b. zu etwa 45 % bis etwa 54 % Kokosöl;
c. zu etwa 8 % bis etwa 12 % Zucker;
d. zu etwa 0,5 % bis etwa 1 % Lecithin; und
e. mindestens 10³ KBE Milchsäurebakterien pro Gramm Beschichtung.

12. Die Beschichtungszusammensetzung auf Joghurtbasis nach Anspruch 11, wobei es sich bei der Beschichtungszusammensetzung auf Joghurtbasis um eine Emulsion handelt, die bei 25 °C mindestens 30 Minuten stabil ist.

13. Ein gefrorenes Lebensmittel, umfassend Speiseeis mit einer Oberfläche, die mit etwa 2 mm bis etwa 3 mm Beschichtungszusammensetzung auf Joghurtbasis nach Anspruch 12 beschichtet ist, wobei die Beschichtung auf dem gefrorenen Lebensmittel mindestens 10³ KBE Milchsäurebakterien pro Gramm Beschichtung enthält.

## Revendications

1. Procédé de fabrication d'une composition de revêtement à base de yaourt, comprenant :
a. la combinaison d'une solution d'huile et de lécithine avec du yaourt et d'une solution de sucre pour produire un mélange de yaourt sucré à une température allant d'environ 40 °C à environ 45 °C ; et
b. l'émulsification du mélange de yaourt sucré pour produire la composition de revêtement à base de yaourt qui est une émulsion qui est stable pendant au moins 30 minutes à 25 °C et contient d'environ 45 % à environ 54 % en poids d'une huile possédant un point de fusion allant d'environ 25 °C à environ 35 °C, environ 29 % à environ 38 % en poids de yaourt, environ 8 % à environ 12 % en poids de sucre, environ 0,5 % à environ 1 % en poids de lécithine, et contenant au moins 10³ unités formant colonie (UFC) de bactéries d'acide lactique par gramme de la composition de revêtement à base de yaourt.

2. Procédé selon la revendication 1, le mélange de yaourt sucré étant émulsifié dans un émulsificateur à cisaillement d'environ 8 000 tpm à environ 10 000 tpm pendant 90 secondes à 150 secondes.

3. Procédé selon la revendication 1, le mélange sucré étant émulsifié dans un émulsificateur à haute pression à une pression d'environ 500 bars à environ 800 bars pendant 90 secondes à 150 secondes.

4. Procédé de fabrication d'une composition de revêtement à base de yaourt, comprenant :
a. la combinaison d'une solution d'huile et de lécithine avec du yaourt pour produire un mélange de yaourt et d'huile à une température allant d'environ 40 °C à environ 45 °C ;
b. l'émulsification du mélange de yaourt et d'huile pour produire une première émulsion ;
c. la combinaison de la première émulsion avec une solution de sucre pour produire un mélange de yaourt sucré ;
d. l'émulsification du mélange de yaourt sucré pour produire la composition de revêtement à base de yaourt qui est une deuxième émulsion qui est stable pendant au moins 30 minutes à 25 °C et contient d'environ 45 % à environ 54 % en poids d'une huile possédant un point de fusion d'environ 25 °C à environ 35 °C, environ 29 % à environ 38 % en poids de yaourt, environ 8 % à environ 12 % en poids de sucre, environ 0,5 % à environ 1 % en poids de lécithine, et contenant au moins 10³ unités formant colonie (UFC) de bactéries d'acide lactique par gramme de la composition de revêtement à base de yaourt.

5. Procédé selon la revendication 4, chacune parmi la première et la deuxième émulsion étant produite dans un émulsificateur à cisaillement d'environ 8 000 tpm à environ 10 000 tpm pendant un total de 90 secondes à 150 secondes.

6. Procédé selon la revendication 4, chacune parmi la première et la deuxième émulsion étant produite dans un émulsificateur à haute pression à une pression d'environ 500 bars à environ 800 bars pendant un total de 90 secondes à 150 secondes.

7. Procédé selon la revendication 1 ou 4, la composition de revêtement à base de yaourt comprenant 53 % à 54 % d'huile de noix de coco, 29 % à 30 % de yaourt, 9 % à 11 % de sucre, et 0,75 % à 0,9 % de lécithine.

8. Procédé selon la revendication 1 ou 4, le yaourt possédant une teneur en protéines allant d'environ 3 % à environ 5 % et une teneur en graisses allant d'environ 6 % à environ 9 %.

9. Procédé selon la revendication 1 ou 4, la lécithine étant dissoute dans l'huile à une température d'environ 68 °C à environ 75 °C.

10. Procédé de fabrication d'un produit alimentaire congelé revêtu, comprenant :
a. l'application de la composition de revêtement à base de yaourt selon la revendication 1 ou la revendication 4 à une température allant d'environ 28 °C à environ 30 °C à une surface d'un produit alimentaire congelé pour revêtir la surface du produit alimentaire congelé avec un revêtement à base de yaourt possédant une épaisseur allant d'environ 2 mm à environ 3 mm ; et
b. refroidissement du produit alimentaire congelé revêtu à une température allant d'environ 0 °C à environ 4 °C, le revêtement sur le produit alimentaire congelé revêtu contenant au moins 10³ UFC de bactéries d'acide lactique par gramme de revêtement.

11. Composition de revêtement à base de yaourt, comprenant :
a. environ 29 % à environ 38 % de yaourt ;
b. environ 45 % à environ 54 % d'huile de noix de coco ;
c. environ 8 % à environ 12 % de sucre ;
d. environ 0,5 % à environ 1 % de lécithine ; et
e. au moins 10³ UFC de bactéries d'acide lactique par gramme de revêtement.

12. Composition de revêtement à base de yaourt selon la revendication 11, la composition de revêtement à base de yaourt étant une émulsion qui est stable à 25 °C pendant au moins 30 minutes.

13. Produit alimentaire congelé, comprenant une crème glacée possédant une surface revêtue avec environ 2 mm à environ 3 mm de la composition de revêtement à base de yaourt selon la revendication 12, le revêtement sur le produit alimentaire congelé contenant au moins 10³ UFC de bactéries d'acide lactique par gramme de revêtement.
